# EUROPEAN PATENT SPECIFICATION

(11) **EP 3 146 875 B1**
(45) Date of publication and mention of the grant of the patent: **18.03.2020**
(21) Application number: 16187944.0
(22) Date of filing: 09.09.2016
(51) Int. Cl.: A47J 43/046, A47J 43/07

(54) **FOOD BLENDER WITH SAFETY PROTECTION MECHANISM**
NAHRUNGSMITTELMIXER MIT SICHERHEITSSCHUTZMECHANISMUS
MÉLANGEUR ALIMENTAIRE AVEC MÉCANISME DE PROTECTION DE SÉCURITÉ

(30) Priority: 28.09.2015 CN 201510627000
(43) Date of publication of application: 29.03.2017
(73) Proprietor: Lee, Wen-Ching, Taichung City 408 (TW)
(72) Inventor: Lee, Wen-Ching, Taichung City 408 (TW)
(74) Representative: Straus, Alexander

(56) References cited:
- EP-A1- 2 921 090
- WO-A1-2011/113083
- DE-A1-102014 103 901
- US-A- 4 741 482
- US-A1- 2014 247 686

## Description

### BACKGROUND OF THE INVENTION

### 1. Field of the Invention

The present invention relates to food blender technology and more particularly, to a food blender with a safety protection mechanism.

### 2. Description of the Related Art

When using a food blender, put food in the food container, and then attach the food container to the blender base of the food blender, and then switch on the power switch of the blender base, causing rotation of the stirrer in the food container to mince food. During the mincing process, if the mincing time is long, continuous crushing between food ingredients and the stirrer can cause generation of heat, resulting in an increase in temperature and pressure in the food container.

More particularly, for the sake of ease of storage, some commercial food blenders use a small capacity food container. Increased temperature and pressure in a food container due to a long mincing time can cause the food container to explore. State of the art documents relating to this technical field are for example: WO 2011/113083 A1, US 4 741 482 A, DE 10 2014 103901 A1, EP 2 921 090 A1, US 2014/247686 A1.

### SUMMARY OF THE INVENTION

The present invention has been accomplished under the circumstances in view. It is therefore the main object of the present invention to provide a food blender, which provides a safety protection mechanism. It is another object of the present invention to provide a food blender, which provides multiple operation modes to fit different capacities of food containers, avoiding food container explosion due to an excessively prolonged operation.

To achieve these and other objects of the present invention, a food blender comprises a blender base and a food container. The blender base comprises a housing, a connector, a plurality of sensing elements and a driving device. The housing comprises a connecting seat. The connector is mounted in the housing. The sensing elements are respectively mounted in the housing near the connecting seat. The driving device is fixedly mounted in the housing, and coupled with the connector and the sensing elements. The food container is detachably mountable in the connecting seat of the housing. The food container comprises a container body, a stirrer and a plurality of magnetic members. The stirrer is mounted in the container body. The magnetic members are mounted in the container body. The driving device controls the operation of the stirrer according to the number of the magnetic members actually detected by the sensing element.

To achieve these and other objects of the present invention, the invention provides an alternate form of the food blender. According to this alternate form, the food blender comprises a blender base, a first food container and a second food container. The blender base comprises a housing, a connector, a plurality of sensing elements and a driving device. The housing comprises a connecting seat. The connector is mounted in the housing. The sensing elements are respectively mounted in the housing near the connecting seat. The driving device is fixedly mounted in the housing, and coupled with the connector and the sensing elements. Further, the driving device provides a first operation mode and a second operation mode. The operating time of the second operation mode is shorter than the operating time of the first operation mode. The first food container is detachably mountable in the connecting seat of the housing. The first food container comprises a first container body, a first stirrer and a plurality of first magnetic members. The first stirrer is mounted in the first container body. The first magnetic members are mounted in the first container body. The second food container is detachably mountable in the connecting seat of the housing. The second food container comprises a second container body, a second stirrer and a plurality of second magnetic members. The second stirrer is mounted in the second container body. The second magnetic members are mounted in the second container body. The capacity of the second food container is smaller than the capacity of the first food container. The number of the first magnetic members is different from the number of the second magnetic members. When the sensing elements detect the number of the first magnetic members, the driving device selects the first operation mode, and controls the first stirrer to operate according to the first operation mode. When the sensing elements detect the number of the second magnetic members, the driving device selects the second operation mode, and controls the second stirrer to operate according to the second operation mode.

Thus, the blender base of the food blender provides a respective operating mode according to the number of the magnetic members actually detected by the sensing elements, avoiding the danger of food container explosion due to an excessively prolonged operation.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is an exploded view of a food blender in accordance with the present invention.
FIG. 2 is a sectional elevation of the food blender shown in FIG. 1.
FIG. 3 is a circuit block diagram of the connector, control button, three sensing elements and driving device of the food blender in accordance with the present invention.
FIG. 4 is a sectional view of the present invention, illustrating the blender base and the food container connected together.

### DETAILED DESCRIPTION OF THE INVENTION

A preferred embodiment of a food blender in accordance with the present invention is described hereinafter in conjunction with the annexed drawings. However, the components, dimension and outer appearance illustrated in the annexed drawings are simply for illustration purpose only but not intended to limit the technical features of the present invention.

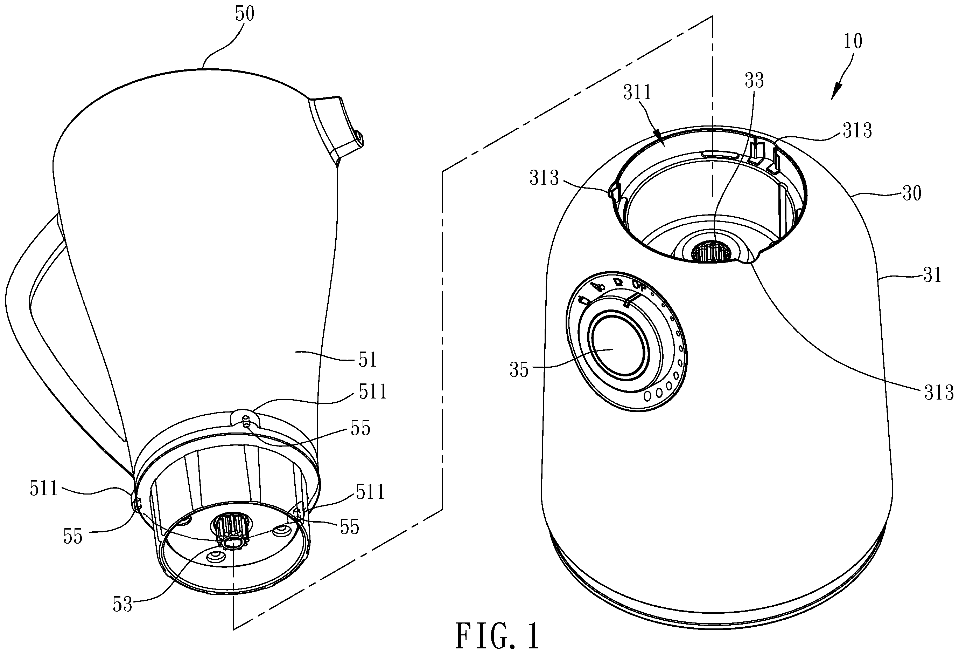

Referring to FIG. 1, a food blender **10** generally comprises a blender base **30** and a food container **50.** The blender base **30** of the food blender **10** comprises a housing **31,** a connector **33** and a control button **35.** The housing **31** comprises a connecting seat **311** and three positioning grooves **313** located on an inner perimeter of the connecting seat **311.** The connector **33** is mounted in the housing **31,** and disposed inside the connecting seat **311.** The control button **35** is mounted on the housing **31.**

The food container **50** comprises a container body **51,** a stirrer **53** and three magnetic members **55.** The container body **51** comprises three protruded portions **511.** The stirrer is mounted in the container body **51,** and rotatable relative to the container body **51.** The three magnetic members **55** are respectively mounted in the three protruded portion **511** of the container body **51.** Further, these three magnetic members **55** are permanent magnets.

The three protruded portions **511** of the container body **51** are respectively aimed at the three positioning grooves **313** in the housing **31** of the blender base **30.** When the food container **50** and the blender base **30** are assembled, the three protruded portions **511** of the container body **51** are respectively engaged in the three positioning grooves **313** of the housing **31,** and the stirrer **53** is connected to the connector **33.** The structure of the stirrer **53** and the connector **33** and their connection are of the known art, therefore we do not repeat them here.

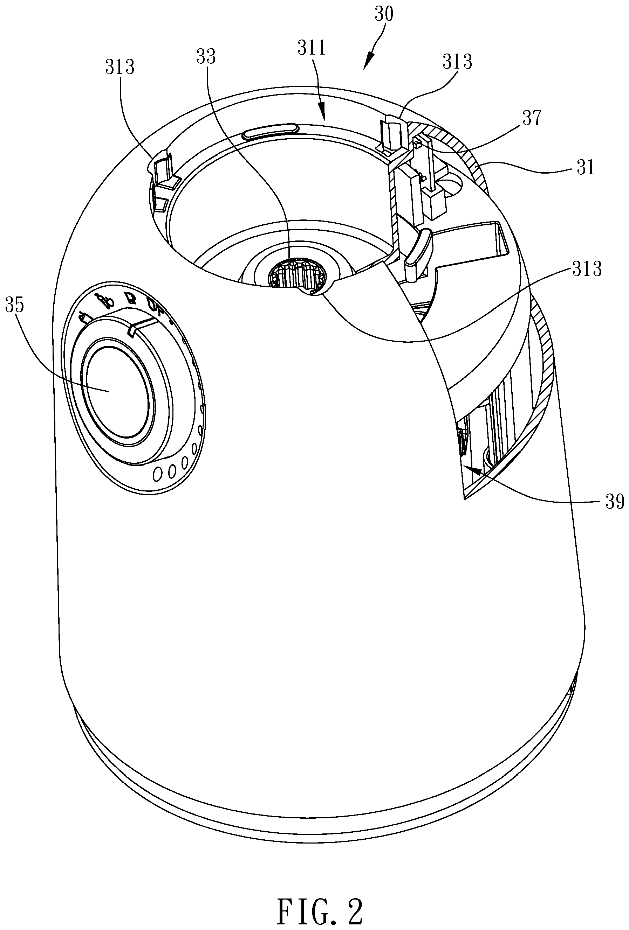

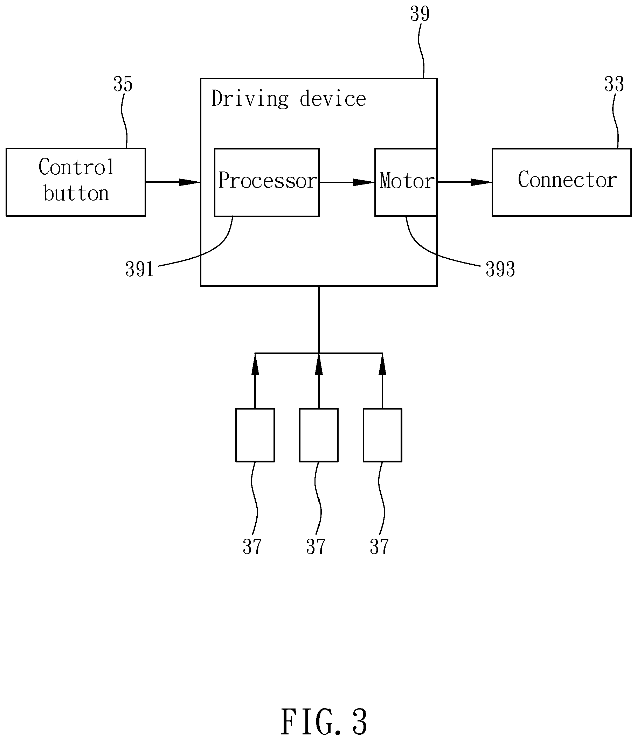

Referring to FIGS. 2 and 3, where FIG. 2 is a sectional elevational view of the blender base **30;** FIG. 3 is a block diagram of the connector **33,** the control button **35,** three sensing elements **37** and a driving device **39.** The blender base **30** further comprises three sensing elements **37** and a driving device **39.** The sensing elements **37** are respectively fixedly mounted in the housing **31** near the connecting seat **311.** The driving device **39** is mounted inside the housing **31,** and coupled with the connector **33,** the control button **35** and the sensing elements **37.** The control button **35** is adapted for controlling the driving device **39** to rotate the connector **33,** for example, adjusting the revolving speed. How the control button **35** controls the driving device **39** is a common knowledge in the art, therefore we do not repeat them here.

In the present preferred embodiment, these sensing elements **37** are mounted inside the housing **31**, and respectively disposed adjacent to the three positioning grooves **313** in the housing **31.** The sensing elements **37** can be, for example, Hall-effect sensors.

The driving device **39** comprises a processor **391** and a motor **393.** The processor **391** has multiple operation modes. These operation modes are configured to control the operating time of the motor **393.** Every operation mode controls the motor **391** to operate at a different operating time. The selection of these operation modes has a great concern with the sensing elements **37.** This operation will be explained later.

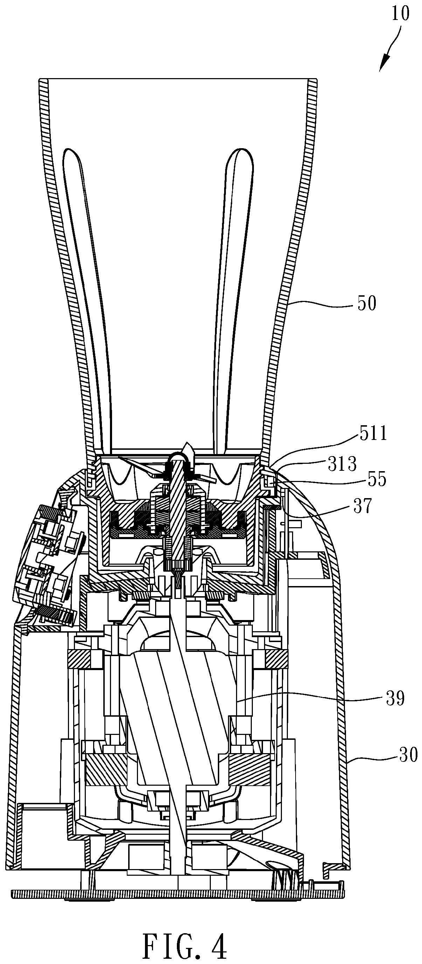

FIG. 4 is a schematic sectional view illustrating the blender base **30** and the food container **50** mounted together. As illustrated, the sensing elements **37** are adapted for sensing the magnetic fields of the respective magnetic members **55,** and then converting the detected magnetic fields into respective electrical signals (for example, voltage or current signals) for analysis by the processor **391** of the driving device **39.** The processor **391** can select a corresponding operation mode.

In the present preferred embodiment, the driving device provides three operation modes (the first operation mode, the second operation mode and the third operation mode) corresponding to three different capacities of food containers, for example, the first (large) food container, the second (medium) food container and the third (small) food container. Therefore, different capacities of food containers have a different number of magnetic members mounted therein. For example, the first, second and third food containers have different capacities and respectively have three magnetic members, two magnetic members and one magnetic member mounted therein. Although the first, second and third food containers have different capacities, they have the same connection structure for connection to the connecting seat of the blender base as previously described.

If the first food container is mounted in the connecting seat of the blender base, the sensing elements of the blender base will detect the presence of the magnetic fields of three magnetic members. Thus, the processor will select the corresponding first operation mode according to the number of three magnetic members. Further, because the first food container has the largest capacity, the motor operating time of this first operation mode is the longest operating time.

If the second food container is mounted in the connecting seat of the blender base, the sensing elements of the blender base will detect the presence of the magnetic fields of two magnetic members. Thus, the processor will select the corresponding second operation mode according to the number of two magnetic members. Further, because the second food container has the medium capacity, the motor operating time of this second operation mode is shorter than the motor operating time of the first operation mode.

If the third food container is mounted in the connecting seat of the blender base, the sensing elements of the blender base will detect the presence of the magnetic field of one single magnetic member. Thus, the processor will select the corresponding third operation mode according to the number of one single magnetic member. Further, because the third food container has the smallest capacity, the motor operating time of this third operation mode is shorter than the motor operating time of the first operation mode and the motor operating time of the second operation mode. Thus, the food blender of the present invention can select a corresponding operation mode subject to the number of magnetic members. Therefore, food containers of different capacities can be operated under a respective appropriate operation mode, avoiding the danger of food container explosion due to an excessively prolonged operation.

Further, the number of the food containers, the sensing elements and the magnetic members is not limited to three. They can be more than three. Further, the arrangement of the sensing elements and the magnetic members is not limited to that illustrated in the annexed drawings. Further, in the present preferred embodiment, three different capacities of food containers are selected for explanation of the technical features of the present invention, however, in actual practice, the selection of different operation modes can be defined according to the function and access authority of the food containers, therefore, the operation mode corresponding to the container capacity is not a limitation.

In the present preferred embodiment, the processor selects the appropriate operation mode according to the actual number of magnetic member detected by the sensing element. However, in actual application, the selection of the operation modes can be achieved through mechanical switch means or any other measures. Thus, the processor simply needs to determine whether or not the selected operation mode is consistent with the number of magnetic members actually detected by the sensing elements. If matched, the processor of the blender base controls the motor to rotate. If not matched, the processor controls the motor not to rotate. Thus, this measure is also within the range of protection of the present invention, achieving the safety protection according to the number of sensing elements and magnetic members.

Although a particular embodiment of the invention has been described in detail for purposes of illustration, various modifications and enhancements may be made without departing from the scope of the invention. Accordingly, the invention is not to be limited except as by the appended claims.

## Claims

1. A food blender (10) comprises a blender base (30) and a food container (50), said blender base (30) comprises a housing (31), a connector (33) and a driving device (39), said housing (31) comprises a connecting seat (311), said connector (33) being mounted in said housing (31), said food container (50) detachably mountable in said connecting seat (311) of said housing (31), said food container (50) comprises a container body (51), a stirrer (53), said stirrer (53) being mounted in said container body (51), said blender base (30) comprises a plurality of sensing elements (37), said sensing elements (37) being respectively mounted in said housing (31) near said connecting seat (311), said driving device (39) being fixedly mounted in said housing (31) and coupled with said connector (33) and said sensing elements (37); and said food container (50) comprises a plurality of magnetic members (55), said magnetic members (55) being mounted in said container body (51), **characterized in that** said driving device (39) is capable of controlling the operation of said stirrer (53) according to the number of said magnetic members (55) being detected by the respective said sensing elements (37).

2. The food blender (10) as claimed in claim 1, wherein said sensing elements (37) are disposed inside said housing (31).

3. The food blender (10) as claimed in claim 1, wherein said driving device (39) comprises a processor (391) and a motor (393), said processor (391) being adapted for controlling the operating time of said motor (393) according to the number of said magnetic members (55) actually detected by said sensing elements (37), said motor (393) being coupled to said processor (391) and controlled by said processor (391) to rotate said stirrer (53).

4. The food blender (10) as claimed in claim 3, wherein said processor (391) provides a plurality of operation modes for controlling said motor (393) to operate at a respective period of operating time, said processor (391) of said blender base (30) selecting one said operation mode according the number of said magnetic members (55) actually detected by said sensing elements (37).

5. The food blender (10) as claimed in claim 1, wherein said housing (31) of said blender base (30) further comprises a plurality of positioning grooves (313) located in an inner perimeter of said connecting seat (311); said sensing elements (37) are respectively disposed adjacent to one respective said positioning grooves (313); said container body (51) of said food container (50) comprises a plurality of protruded portions respectively disposed corresponding to one respective said positioning grooves (313); said magnetic members (55) are respectively mounted in one respective said protruded portion.

6. The food blender (10) as claimed in claim 1, wherein said magnetic members (55) are permanent magnets.

## Patentansprüche

1. Mixgerät (10), welches eine Mixerbasis (30) und einen Nahrungsmittelbehälter (50) umfasst, worin die Mixerbasis (30) ein Gehäuse (31), einen Verbinder (33) und eine Antriebseinrichtung (39) umfasst, worin das Gehäuse (31) einen Verbindungssitz (311) umfasst, worin der Verbinder (33) in dem Gehäuse (31) befestigt ist, worin der Nahrungsmittelbehälter (50) in dem Verbindungssitz (311) des Gehäuses (31) abnehmbar befestigbar ist, worin der Nahrungsmittelbehälter (50) einen Behälterkörper (51) und einen Rührer (53) umfasst, worin der Rührer (53) in dem Behälterkörper (51) befestigt ist, worin die Mixerbasis (30) mehrere Erfassungselemente (37) umfasst, worin die Erfassungselemente (37) in dem Gehäuse (31) nahe dem Verbindungssitz (311) befestigt sind, worin die Antriebseinrichtung (39) in dem Gehäuse (31) fest befestigt ist und mit dem Verbinder (33) und den Erfassungselementen (37) gekoppelt sind; und worin der Nahrungsmittelbehälter (50) mehrere Magnetelemente (55) umfasst, worin die Magnetelemente (55) in dem Behälterkörper (51) befestigt sind, **dadurch gekennzeichnet, dass**
die Antriebseinrichtung (39) den Betrieb des Rührers (53) gemäß der Anzahl der Magnetelemente (55), die jeweils durch die Erfassungselemente (37) erfasst werden, steuern kann.

2. Mixgerät (10) nach Anspruch 1, worin die Erfassungselemente (37) in dem Gehäuse (31) vorgesehen sind.

3. Mixgerät (10) nach Anspruch 1, worin die Antriebseinrichtung (39) einen Prozessor (391) und einen Motor (393) umfasst, worin der Prozessor (391) angepasst ist, die Betriebsdauer des Motors (393) gemäß der Anzahl der durch die Erfassungselemente (37) tatsächlich erfassten Magnetelemente (55) zu steuern, worin der Motor (393) mit dem Prozessor (391) gekoppelt ist und durch den Prozessor (391) gesteuert wird, um den Rührer (53) zu drehen.

4. Mixgerät (10) nach Anspruch 3, worin der Prozessor (391) mehrere Betriebs-Modi zur Steuerung des Motors (393) liefert, um eine entsprechende Betriebsdauer bereit zu stellen, worin der Prozessor (391) der Mixerbasis (30) eine der Betriebs-Modi gemäß der Anzahl der tatsächlich durch die Erfassungselemente (37) erfassten Magnetelemente (55) wählt.

5. Mixgerät (10) nach Anspruch 1, worin das Gehäuse (31) der Mixerbasis (30) weiter mehrere Positionierungsvertiefungen (313) aufweist, die in einem inneren Umfang des Verbindungssitz (311) angeordnet sind; worin die Erfassungselemente (37) jeweils neben einer der Positionierungsvertiefungen (313) vorgesehen sind; worin der Behälterkörper (51) des Nahrungsmittelbehälters (50) mehrere vorstehende Bereiche umfasst, die jeweils entsprechend einer der Positionierungsvertiefungen (313) vorgesehen sind; worin die Magnetelemente (55) jeweils in einer der vorstehenden Bereiche vorgesehen sind.

6. Mixgerät (10) nach Anspruch 1, worin die Magnetelemente (55) PermanentMagnete sind.

## Revendications

1. Mélangeur d'aliments (10) comprenant une base de mélangeur (30) et un récipient à aliments (50), ladite base de mélangeur (30) comprenant un boîtier (31), un raccord (33) et un dispositif d'entraînement (39), ledit boîtier (31) comprenant un siège de raccordement (311), ledit raccord (33) étant monté dans ledit boîtier (31), ledit récipient à aliments (50) pouvant être monté de manière amovible dans ledit siège de raccordement (311) dudit boîtier (31), ledit récipient à aliments (50) comprenant un corps de récipient (51), un agitateur (53), ledit agitateur (53) étant monté dans ledit corps de récipient (51), ladite base de mélangeur (30) comprenant une pluralité d'éléments de détection (37), lesdits éléments de détection (37) étant respectivement montés dans ledit boîtier (31) à proximité dudit siège de raccordement (311), ledit dispositif d'entraînement (39) étant monté de manière fixe dans ledit boîtier (31) et accouplé audit raccord (33) et auxdits éléments de détection (37) ; et ledit récipient à aliments (50) comprenant une pluralité d'éléments magnétiques (55), lesdits éléments magnétiques (55) étant montés dans ledit corps de récipient (51), **caractérisé en ce que** ledit dispositif d'entraînement (39) est apte à commander le fonctionnement dudit agitateur (53) en fonction du nombre desdits éléments magnétiques (55) détectés par lesdits éléments de détection (37) respectifs.

2. Mélangeur d'aliments (10) selon la revendication 1, lesdits éléments de détection (37) étant disposés à l'intérieur dudit boîtier (31).

3. Mélangeur d'aliments (10) selon la revendication 1, ledit dispositif d'entraînement (39) comprenant un processeur (391) et un moteur (393), ledit processeur (391) étant conçu pour commander le temps de fonctionnement dudit moteur (393) en fonction du nombre desdits éléments magnétiques (55) réellement détectés par lesdits éléments de détection (37), ledit moteur (393) étant accouplé audit processeur (391) et commandé par ledit processeur (391) pour faire tourner ledit agitateur (53).

4. Mélangeur d'aliments (10) selon la revendication 3, ledit processeur (391) fournissant une pluralité de modes de fonctionnement pour commander le fonctionnement dudit moteur (393) pendant une période de temps de fonctionnement respective, ledit processeur (391) de ladite base de mélangeur (30) sélectionnant un dit mode de fonctionnement en fonction du nombre desdits éléments magnétiques (55) réellement détectés par lesdits éléments de détection (37).

5. Mélangeur d'aliments (10) selon la revendication 1, ledit boîtier (31) de ladite base de mélangeur (30) comprenant en outre une pluralité de rainures de positionnement (313) situées dans un périmètre interne dudit siège de raccordement (311) ; lesdits éléments de détection (37) étant respectivement disposés de manière adjacente à l'une desdites rainures de positionnement (313) respectives ; ledit corps de récipient (51) dudit récipient à aliments (50) comprenant une pluralité de parties en saillie disposées respectivement en correspondance avec l'une desdites rainures de positionnement (313) respectives ; lesdits éléments magnétiques (55) étant respectivement montés dans une dite partie en saillie respective.

6. Mélangeur d'aliments (10) selon la revendication 1, lesdits éléments magnétiques (55) étant des aimants permanents.
